Europäisches Patentamt

European Patent Office

Office européen des brevets

(19)

(11) Veröffentlichungsnummer: **0 257 209 B1**

## EUROPÄISCHE PATENTSCHRIFT

(12)

(45) Veröffentlichungstag der Patentschrift: **09.09.92**

(51) Int. Cl.5: **G02F 1/01**, G01C 19/64

(21) Anmeldenummer: **87107559.4**

(22) Anmeldetag: **23.05.87**

(54) Schaltungsanordnung zur Erzeugung einer Phasenmodulation in einer Lichtleitfaser.

(30) Priorität: **21.08.86 DE 3628409**

(43) Veröffentlichungstag der Anmeldung:
**02.03.88 Patentblatt 88/09**

(45) Bekanntmachung des Hinweises auf die
Patenterteilung:
**09.09.92 Patentblatt 92/37**

(84) Benannte Vertragsstaaten:
**DE FR GB IT NL**

(56) Entgegenhaltungen:

**TRANSACTIONS OF THE I.E.C.E. OF JAPAN,
Band E69, Nr. 4, April 1986, Seiten 406-408,
Tokyo, JP; H. SHIMIZU et al.: "Modulation
index stabilization of optical phase modulator of fiber gyro by dual core fiber sensor"**

**IEE PROCEEDINGS SECTION A a I, Band 132,
Nr. 5, Oktober 1985, Teil J, Seiten 287-290,
IEE Proceedings, Stevenage, Herts, GB; J.P.
DAKIN et al.: "A fibre optic serrodyne frequency translator based on a
piezoelectrically-strained fibre phase shifter"**

(73) Patentinhaber: **TELDIX GmbH
Grenzhöfer Weg 36 Postfach 105608
W-6900 Heidelberg 1(DE)**

(72) Erfinder: **Baron, Klaus Uwe, Dr. rer. nat.
Turnerstrasse 11
W-6900 Heidelberg 1(DE)**
Erfinder: **Kiesel, Eberhard, Dipl.-Phys.
Friedrichsfelder Strasse 19
W-6803 Edingen(DE)**

(74) Vertreter: **Wiechmann, Manfred, Dipl.-Ing.
ANT Nachrichtentechnik GmbH Patentabteilung Gerberstrasse 33
W-7150 Backnang(DE)**

**Beschreibung**

Die Erfindung betrifft eine Schaltungsanordnung zur Erzeugung einer Phasenmodulation eines Lichtstrahls in einer Lichtleitfaser mit den Merkmalen des Oberbegriffs des Anspruchs 1.

Bekanntlich werden die Lichtstrahlen in Faserkreiseln zur Empfindlichkeitserhöhung phasenmoduliert.

Es ist weiterhin bekannt, daß man eine Phasenbeeinflussung eines Lichtstrahls in einer Lichtleitfaser dadurch bewirken kann, daß man einen Teil der Faser um einen piezoelektrischen Körper wickelt und den piezoelektrischen Körper mit einer Spannung erregt. Hierdurch werden Längenänderungen der Lichtleitfaser und damit Phasenänderungen hervorgerufen. Siehe z.B. EPA 0160 450.

Die Literaturstelle "Transactions of the I.E.C.E. of Japan", Band E 69, Nr. 4, vom April 1986 beschreibt auf Seite 407 eine Schaltungsanordnung zur Erzeugung einer Phasenmodulation in einer Lichtleitfaser.

Bei dieser Anordnung ist ebenfalls ein Teil der Lichtleitfaser um einen piezoelektrischen Körper gewickelt. Der piezoelektrische Körper wird mit einer Modulationsspannung erregt und dadurch eine Phasenmodulation erzeugt. Im Rückkopplungskreis sind Schaltmittel zur Stabilisierung der Phasenmodulation vorgesehen. Als Sensor für die Phasenmodulation dient hier eine zusätzliche auf dem Dual core Körper vorgesehene Lichtleitfaser.

Benutzt man diese Möglichkeit der Phasenbeeinflussung zur Phasenmodulation bei einem faseroptischen Interferometer (Faserkreisel), so ist darauf zu achten, daß der Modulator mit konstanter Modulationsamplitude und konstanter Modulationsfrequenz betrieben wird, wozu bekannte Modulationsmethoden verwendet werden können. Hierbei wird jedoch nicht berücksichtigt, daß durch Änderungen der Piezocharakteristik (Polarisation des Materials, mechanische Resonanzfrequenz) beispielsweise durch Umwelteinflüsse, Materialalterung oder Exemplarstreuung, der Modulationshub trotz Stabilisierung der Anregungsspannung nicht konstant bleibt. Dies wird besonders offenkundig, wenn berücksichtigt wird, daß ein solcher Modulator vorzugsweise in seiner mechanischen Resonanzfrequenz betrieben wird und dann aufgrund seines Kennlinienverlaufs bereits kleine Frequenzabweichungen zu großen Änderungen der Modulationsamplitude führen.

Der Erfindung liegt die Aufgabe zugrunde, den eingangs beschriebenen Phasenmodulator dahingehend zu verbessern, daß auch bei Änderungen der Piezocharakteristik der Modulationshub weitgehend konstant bleibt.

Die Aufgabe wird durch die im Anspruch 1 angegebenen Merkmale gelöst. Bei der Erfindung wird am piezoelektrischen Körper direkt festgestellt, ob der Phasenmodulator mit seiner Resonanzfrequenz erregt wird.

Es erfolgt eine Regelung auf einen Betrieb bei Resonanzfrequenz. Hierbei macht man sich die Eigenschaft zunutze, daß die Erregerspannung und die am piezoelektrischen Körper abgegriffene Spannung bei Abweichen von der Resonanzfrequenz unterschiedliche Phasenlagen aufweisen. Ebenso wird am piezoelektrischen Körper direkt festgestellt, ob der Modulationshub konstant bleibt. Entsprechend wird die Erregung des piezoelektrische Körpers geregelt.

Ausführungsbeispiele für die erfindungsgemäße Schaltungsanordnung ergeben sich aus den Unteransprüchen.

Anhand der Zeichnung wird ein Ausführungsbeispiel der Erfindung näher erläutert.

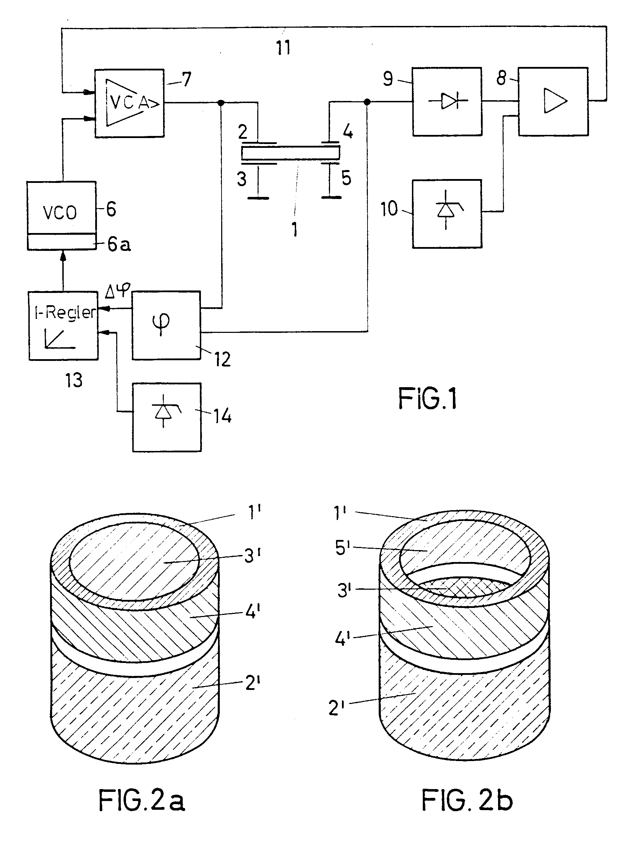

Es zeigen Fig. 1 ein Blockschaltbild einer erfindungsgemäßen Schaltungsanordnung. Fig. 2a und Fig. 2b zeigen Ausbildungsformen für den in Fig. 1 verwendeten Meßwertgeber.

In Fig. 1 ist mit 1 ein piezoelektrischer Körper bezeichnet, um den die hier nicht gezeigte Lichtleitfaser teilweise herumgewickelt ist. Dieser weist Erregerelektroden 2 und 3 bzw. Meßwertgeberelektroden 4 und 5 auf. Der Körper 1 und die Elektroden können, wie z.B. in Fig. 2b gezeigt, ausgebildet sein. Sich entsprechende Teile sind dort mit einem " ' " versehen. Der Körper 1 ist als Hohlzylinder ausgebildet. Auf einem Teil seiner inneren und äußeren Oberfläche sind Erregerelektroden 2' und 3' aufgebracht. Andere Teile der Oberfläche sind mit Meßwertgeberelektroden 4' und 5' versehen.

Man könnte die Elektroden 3 und 5 der Fig. 1 auch zu einer gemeinsamen Elektrode zusammenfassen. Fig.2a zeigt ein Beispiel. Hier steht den Elektroden 2' und 4' eine sich über die gesamte Innenfläche erstreckende gemeinsame Elektrode 3' gegenüber.

Die Elektrode 4 der Fig. 1 ist mit einem Gleichrichter 9 verbunden, dessen Ausgang einem Differenzverstärker 8 zugeführt wird. Diesem wird außerdem an seinem zweiten Eingang noch vom Block 10 her eine Referenzgröße zugeführt, die die Amplitude der Erregerspannung bestimmt. Die am Ausgang des Differenzverstärkers 8 anstehende Differenzgröße wird über eine Leitung 11 einem Eingang eines spannungsgesteuerten Verstärkers 7 zugeführt. Zur Erregung des piezoelektrischen Körpers 1 ist ein Oszillator 6 vorgesehen, dessen Wechselspannung der Erregerelektrode 2 über diesen Verstärker 7 zugeführt wird.

Durch diese Referenzgröße wird die Verstärkung des Verstärkers 7 und damit die Amplitude der Erregerspannung bestimmt.

Ändert sich aus irgendwelchen Gründen die Verstärkung des Verstärkers 7, bzw. die Amplitude der erregten Schwingung des piezoelektrischen Körpers 1, so ändert der Meßwertgeber 4/5 auch die Amplitude seines Ausgangssignals. Hierdurch wird auch das Ausgangssignal des Differenzverstärkers 8 und damit die Verstärkung des Verstärkers 7 im Sinne einer Änderung der Schwingungsamplitude auf den Sollwert hin geändert.

Um den Phasenmodulator bei seiner Resonanzfrequenz zu betreiben, muß die Frequenz des Oszillators 6 mit dieser Resonanzfrequenz übereinstimmen. Mittels eines Phasenvergleichs der Erregerspannung (Modulationsspannung) mit der Ausgangsspannung des Meßwertgebers 4/5 in einem Phasenkomparator 12 und einem Vergleich der festgestellten Phasendifferenz mit einer Sollphase wird festgestellt, ob die Frequenz der Erregerspannung mit der Resonanzfrequenz übereinstimmt. Dies geschieht dadurch, daß der Phasenkomparator 12 ein der Phasendifferenz $\Delta\phi$ entsprechendes Signal (z.B. Spannung oder Strom) abgibt und dieses Signal mit einem die Sollphase bestimmenden Signal (z.B. Spannung oder Strom), das als Ausgangssignal eines Blocks 14 zur Verfügung steht, in einem Integralregler 13 verglichen wird, der entsprechend der Abweichung dieser beiden Signale voneinander ein Ansteuerungssignal für einen Teil 6a des Oszillators 6 erzeugt, mit dem die Frequenz des Oszillators im Sinne einer Annäherung an die Resonanzfrequenz geändert wird.

Bei einem vorgegebenen piezoelektrischen Körper weisen bei Erregung mit der Resonanzfrequenz die Modulationsspannungen und die Meßwertgeberspannung bzw. die entsprechenden Ströme vorgegebene Phasenlagen zueinander auf.

## Patentansprüche

1. Schaltungsanordnung zur Erzeugung einer Phasenmodulation eines Lichtstrahls in einer Lichtleitfaser, bei der wenigstens ein Teil der Lichtleitfaser um einen piezoelektrischen Körper gewickelt ist, bei der der piezoelektrische Körper mittels einer Modulationsspannung erregt und dadurch die Phasenmodulation erzeugt wird und bei der Schaltmittel zur Stabilisierung der Phasenmodulation vorgesehen sind, dadurch gekennzeichnet, daß die Schaltmittel aus einem am piezoelektrischen Körper (1) angebrachten Meßwertgeber (4, 4', 5, 5') zur Bestimmung des Schwingungszustands, einem Phasenkomparator (12) zum Vergleich der Phasenlage der Modulationsspannung mit dem Meßwertgebersignal und einem Steuerglied (6a, 13, 14) zur Beeinflussung der Frequenz der Modulationsspannung in Abhängigkeit vom Ausgang des Phasenkomparators (12) besteht.

2. Schaltungsanordnung nach Anspruch 1, dadurch gekennzeichnet, daß ein Differenzverstärker (8) zum Vergleich der Amplitude des Meßwertgebersignals mit einer Referenzgröße (aus 10) und ein Steuerglied (7) zur Beeinflussung der Amplitude der Erregerspannung in Abhängigkeit des Differenzverstärker-Ausgangssignals (über 11) vorgesehen ist.

3. Schaltungsanordnung nach Anspruch 1, dadurch gekennzeichnet, daß der piezoelektrische Körper (1, 1') neben zwei Erregerelektroden (2, 2', 3, 3') wenigstens eine Meßwertgeberelektrode (4, 4', 5, 5') aufweist.

4. Schaltungsanordnung nach Anspruch 1, dadurch gekennzeichnet, daß der Phasenkomparator (12) ein der Differenz $\Delta\phi$ der Phasenlagen der Modulationsspannungen und des Meßwertgebersignals entsprechendes Signal abgibt, daß dieses mit einem die Solldifferenz bestimmenden Signal (aus 14) verglichen und die Abweichung zur Beeinflussung der Frequenz der Modulationsspannung (in 6a) benutzt wird.

5. Schaltungsanordnung nach Anspruch 2, dadurch gekennzeichnet, daß ein Gleichrichter (9) zwischen Meßwertgeber (4, 4', 5, 5') und Differenzverstärker (8) eingeschaltet ist.

6. Schaltungsanordnung nach Anspruch 2, dadurch gekennzeichnet, daß in die Zuführung zur Erregeranordnung (2, 2', 3, 3') des piezoelektrischen Körpers (1) ein in seiner Verstärkung veränderbarer Verstärker (7) eingeschaltet ist, dessen Verstärkung vom Ausgangssignal des Differenzverstärkers (8) variiert wird.

7. Schaltungsanordnung nach einem der Ansprüche 1 bis 6, gekennzeichnet durch ihre Anwendung als Phasenmodulator in einem faseroptischen Interferometer.

## Claims

1. Circuit arrangement for the generation of a phase modulation of a light beam in an optical fibre, in which at least a part of the optical fibre is wound around a piezoelectric body, in which the piezoelectric body is excited by means of a modulation voltage and the phase modulation is thereby generated, and in which circuit means for the stabilisation of the phase modulation are provided, characterised thereby that the circuit means consists of a measured value transmitter (4, 4', 5, 5'), which is mounted at the piezoelectric body (1), for the determination of the oscillation state, a phase comparator (12) for the comparison of the phase position of the modulation voltage with the signal of the measured value transmitter, and a control element (6a, 13, 14) for the influencing of the frequency of the modulation voltage in dependence on the output of the phase comparator (12).

2. Circuit arrangement according to claim 1, characterised thereby that a difference amplifier (8) is provided for the comparison of the amplitude of the signal of the measured value transmitter with a reference magnitude (from 10) and a control element (7) is provided for the influencing of the amplitude of the excitation voltage in dependence on the output signal of the difference amplifier (by way of 11).

3. Circuit arrangement according to claim 1, characterised thereby, that the piezoelectric body (1, 1') has, apart from two excitation electrodes (2, 2', 3, 3'), at least one measured value transmitter electrode (4, 4', 5, 5').

4. Circuit arrangement according to claim 1, characterised thereby that the phase comparator (12) delivers a signal corresponding to the difference $\Delta\phi$ of the phase positions of the modulation voltages and of the signal of the measured value transmitter and that this is compared with a signal (from 14) defining the target difference and the deviation is used for the influencing of the frequency of the modulation voltage (in 6a).

5. Circuit arrangement according to claim 2, characterised thereby that a rectifier (9) is connected between measured value transmitter (4, 4', 5, 5') and difference amplifier (8).

6. Circuit arrangement according to claim 2, characterised thereby that connected into the feed line to the exciter arrangement (2, 2', 3, 3') is an amplifier (7) which is changeable in its amplification and the amplification of which is varied by the output signal of the difference amplifier (8).

7. Circuit arrangement according to one of claims 1 to 6, characterised by its use as phase modulation in a fibre optic interferometer.

**Revendications**

1. Montage pour produire une modulation de phase d'un rayon lumineux dans une fibre formant guide de lumière, dans lequel au moins une partie de la fibre guide de lumière est enroulée sur un corps piézoélectrique, dans lequel le corps piézoélectrique est excité au moyen d'une tension de modulation, ce qui produit la modulation de phase, et dans lequel des moyens de couplage sont prévus pour stabiliser la modulation de phase, caractérisé en ce que les moyens de couplage sont constitués d'un capteur (4, 4', 5, 5') disposé sur le corps piézoélectrique (1) pour déterminer l'état d'oscillation, d'un comparateur de phases (12) pour comparer la position de phase de la tension de modulation avec le signal du capteur, et d'un organe de commande (6a, 13, 14) pour influencer la fréquence de la tension de modulation en fonction du signal de sortie du comparateur de phases (12).

2. Montage selon la revendication 1, caractérisé en ce qu'il comprend un amplificateur différentiel (8) pour comparer l'amplitude du signal du capteur avec une grandeur de référence (provenant de 10) et un organe de commande (7) pour influencer l'amplitude de la tension d'excitation en fonction du signal de sortie de l'amplificateur différentiel (par 11).

3. Montage selon la revendication 1, caractérisé en ce que le corps piézoélectrique (1, 1') comprend, outre deux électrodes d'excitation (2, 2', 3, 3'), au moins une électrode de capteur (4, 4', 5, 5').

4. Montage selon la revendication 1, caractérisé en ce que le comparateur de phases (12) délivre un signal correspondant à la différence $\Delta\phi$ des positions de phase de la tension de modulation et du signal de capteur, que ce signal est comparé avec un signal déterminant la différence de consigne (provenant de 14), et que l'écart est utilisé pour influencer la fréquence de la tension de modulation (dans 6a).

5. Montage selon la revendication 2, caractérisé en ce qu'un redresseur (9) est interposé entre le capteur (4, 4', 5, 5') et l'amplificateur différentiel (8).

6. Montage selon la revendication 2, caractérisé en ce qu'un amplificateur (7) à gain variable est interposé dans l'alimentation du dispositif capteur (2, 2', 3, 3') du corps piézoélectrique (1), le gain de cet amplificateur étant varié par le signal de sortie de l'amplificateur différentiel (8).

7. Montage selon une des revendications 1 à 6, caractérisé par son application en tant que modulateur de phase dans un interféromètre à fibre optique.

FIG.1

FIG.2a

FIG.2b